# EUROPÄISCHE PATENTSCHRIFT

(11) **EP 1 487 669 B1**
(45) Veröffentlichungstag und Bekanntmachung des Hinweises auf die Patenterteilung: **07.09.2005**
(21) Anmeldenummer: 03708230.2
(22) Anmeldetag: 13.03.2003
(51) Int. Cl.: B60R 16/02

(54) **GESTÄNGEDURCHFÜHRUNG, INSBESONDERE FÜR BETÄTIGUNGS - GESTÄNGE IN KRAFTFAHRZEUGEN**
ROD PASSAGE, ESPECIALLY FOR ACTUATING RODS IN MOTOR VEHICLES
PASSAGE DE TIGE, NOTAMMENT POUR TIGE DE COMMANDE DANS DES AUTOMOBILES

(30) Priorität: 15.03.2002 DE 10211629
(43) Veröffentlichungstag der Anmeldung: 22.12.2004
(73) Patentinhaber: Johnson Controls Interiors GmbH, 42285 Wuppertal (DE)
(72) Erfinder: WOLFF, Martin, 45529 Hattingen (DE); WERNER, Johann-Georg, 59071 Hamm (DE)
(74) Vertreter: Kutzenberger, Helga
(86) Internationale Anmeldenummer: PCT/EP2003/002612
(87) Internationale Veröffentlichungsnummer: WO 2003/078212

(56) Entgegenhaltungen:
- EP-A- 1 157 894
- FR-A- 2 761 448
- US-A- 5 448 017
- US-A- 5 728 974
- US-A- 5 739 475

## Beschreibung

Die vorliegende Erfindung betrifft eine Gestängedurchführung, insbesondere für ein Betätigungs-Gestänge in einem Kraftfahrzeug, mit einer in eine Montageöffnung eines Bauteils einzusetzenden Aufnahmebuchse, die eine Durchführöffnung für das Gestänge aufweist.

Die Montage von Betätigungsgestängen z. B. in der Kfz-Industrie ist häufig deshalb schwierig, weil die entsprechende Montageöffnung des jeweiligen Bauteils von derjenigen Seite her, von der aus das Gestänge einzuführen ist, nicht direkt sichtbar und zugänglich ist. Deshalb muß die Montage durch ein fühlendes Suchen durch den Monteur durchgeführt werden, was schwierig und zeitaufwendig ist und auch die Gefahr einer Fehlmontage beinhaltet.

Eine gattungsgemäße Gestängedurchführung ist aus der US 5 739 475 A bekannt.

Der vorliegenden Erfindung liegt die Aufgabe zugrunde, bei einer Gestängedurchführung der genannten Art mit einfachen und kostengünstigen Mitteln eine Montagevereinfachung zu erreichen.

Erfindungsgemäß wird dies dadurch erreicht, dass die Aufnahmebuchse einseitig ein verlängertes, die Montageöffnung des Bauteils überragendes, derart rampen- und/oder trichterartiges Einführhilfselement aufweist, dass das Gestänge mit einem einzuführenden Ende durch gleitende Anlage an bzw. in dem Einführhilfselement in die Durchführöffnung einführbar ist. Dabei ist die Aufnahmebuchse vorzugsweise derart von einer Außenseite des jeweiligen Bauteils her mit dem Einführhilfselement voran und gegebenenfalls unter elastischer radialer Verformung (Verengung) des Einführhilfselementes in die Montageöffnung einsetzbar, insbesondere einrastbar, dass im eingesetzten Zustand das Einführhilfselement frei in einen Innenraum des Bauteils ragt, während die Aufnahmebuchse auf der Bauteil-Außenseite vorzugsweise im Wesentlichen bündig mit einer die Montageöffnung mündungsseitig umgebenden Bauteilfläche abschließt.

Durch die Erfindung wird die Gestängemontage wesentlich erleichtert und vereinfacht, indem mit dem einzuführenden Stangenende das erfindungsgemäße Einführhilfselement wegen seines im Vergleich zur Durchführöffnung deutlich größeren Erfassungsbereichs leichter und schneller gefunden und dann durch eine entlanggleitende Anlage in die Durchführöffnung eingeführt werden kann. Dazu geht eine Einführgleitfläche des Einführhilfselementes direkt in die Durchführöffnung der Aufnahmebuchse über. Die Erfindung führt somit zu einer deutlichen Zeiterspamis bei der Gestängemontage und zu einer wesentlich höheren Montagesicherheit durch Vermeidung von Fehlmontagen.

Weitere vorteilhafte Ausgestaltungsmerkmale der Erfindung sind in den Unteransprüchen sowie der folgenden Beschreibung enthalten.

Anhand von in der Zeichnung veranschaulichten, bevorzugten Ausführungsbeispielen soll die Erfindung genauer erläutert werden. Dabei zeigen:
- Fig. 1: einen Schnitt durch ein mit einer erfindungsgemäßen Gestängedurchführung ausgestattetes Bauteil,
- Fig. 2: eine Perspektivansicht einer ersten Ausführungsform einer erfindungsgemäßen Aufnahmebuchse und
- Fig. 3: eine zweite Ausführungsform einer erfindungsgemäßen Aufnahmebuchse wiederum in Perspektivansicht.

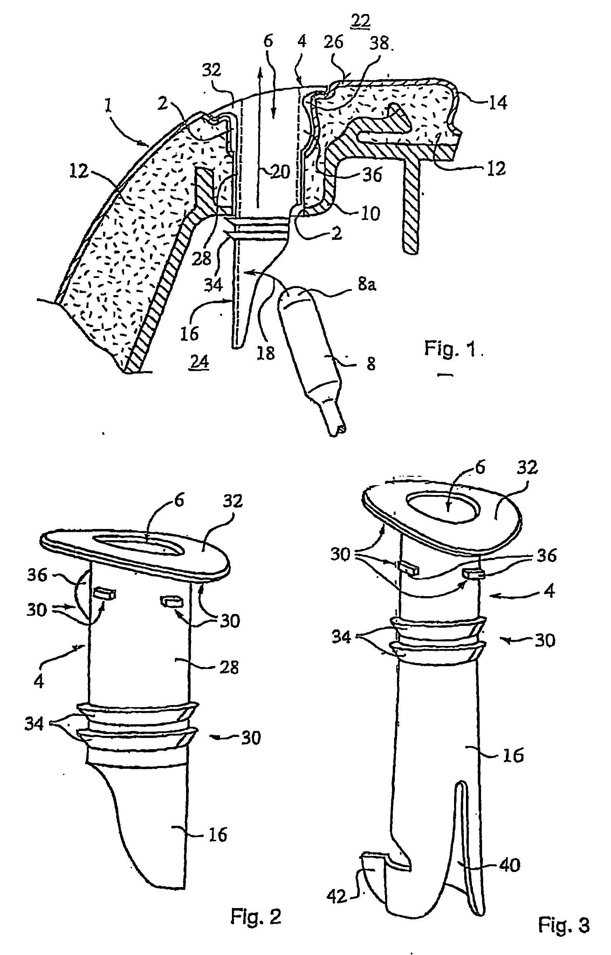

In Fig. 1 ist ein Teil eines Bauteils 1 im Schnitt dargestellt, wobei es sich beispielsweise um den Bordkantenbereich einer Fahrzeugtür handeln kann. Das Bauteil 1 weist eine Montageöffnung 2 auf, in die eine Aufnahmebuchse 4 eingesetzt ist. Die Aufnahmebuchse 4 weist eine Durchführöffnung 6 für ein Gestänge 8 auf, bei dem es sich im dargestellten Anwendungsbeispiel um eine Verriegelungsstange zur Betätigung einer Türverriegelung handelt.

Das Bauteil 1 kann - wie dargestellt - als mehrschichtiges Anbauteil ausgebildet sein, welches aus einer tragenden, formstabilen Struktur 10, einem angeschäumten Schaumteil 12 und einem äußeren Bezugmaterial 14 besteht.

Erfindungsgemäß weist die Aufnahmebuchse 4 einseitig ein verlängertes, die Montageöffnung 2 des Bauteils 1 überragendes Einführhilfselement 16 auf. Dieses Einführhilfselement 16 ist in direkter Verlängerung der Durchführöffnung 6 derart rampen- und/oder trichterartig ausgebildet, dass das Gestänge 8 gemäß Fig. 1 mit einem einzuführenden Ende 8a in Pfeilrichtung 18 zur Anlage gebracht und dann durch gleitende Anlage in Pfeilrichtung 20 in die Durchführöffnung 6 eingeführt werden kann.

In der bevorzugten Ausgestaltung ist die Aufnahmebuchse 4 von einer Außenseite 22 des Bauteils 1 her mit dem Einführhilfselement 16 voran in die Montageöffnung 2 einsetzbar, und zwar insbesondere einrastbar. Im eingesetzten Zustand (Fig. 1) ragt das Einführhilfselement 16 frei in einen Innenraum 24 des Bauteils 1, während die Aufnahmebuchse 4 vorzugsweise auf der Bauteil-Außenseite 22 im Wesentlichen bündig mit einer die Montageöffnung 2 mündungsseitig umgebenden Bauteilfläche 26 abschließt.

Wie sich auch aus den Fig. 2 und 3 ergibt, weist die Aufnahmebuchse 4 einen hohlzylindrischen, die Durchführöffnung 6 aufweisenden Halteabschnitt 28 auf, der seinerseits Fixiermittel 30 zum lagefixierten Halten der Aufnahmebuchse 4 in der Montageöffnung 2 des Bauteils 1 aufweist. So ist zur Halterung der Aufnahmebuchse 4 in Einführrichtung bzw. Gestänge-Durchfühnichtung vorgesehen, dass der Halteabschnitt 28 als Fixiermittel 30 einerseits auf seiner dem Einführhilfselement 16 gegenüberliegenden Seite einen radialen, flanschartigen, ringscheibenförmigen Auflageansatz 32 zur Auflage auf der äußeren Bauteilfläche 26 (bzw. in einer in dieser gebildeten Vertiefung) sowie andererseits im Übergangsbereich zu dem Einführhilfselement 16 mindestens einen radialen Rastansatz 34 zum rastenden Hintergreifen eines zum Bauteil-Innenraum 24 weisenden Öffnungsrandes der Montageöffnung 2 aufweist. In der dargestellten, bevorzugten Ausführung weist der Halteabschnitt 28 (mindestens) zwei in Einsetzrichtung gegeneinander versetzte, insbesondere jeweils ringförmig umlaufende und mit einer widerhaken- bzw. sägezahnartigen Profilkontur ausgebildete Rastansätze 34 auf. Diese Ausgestaltung gewährleistet eine sichere Halterung auch bei unterschiedlich dicken Bauteilen 1 bzw. unterschiedlichen Längen der Montageöffnung 2, so beispielsweise auch bei mehrschichtigen Anbauteilen wie in Fig. 1 dargestellt. Durch die mehreren, in Einsetzrichtung versetzten Rastansätze 34 wird zudem auch ein spielfreier Sitz der Aufnahmebuchse 4 in der Montageöffnung 2 erreicht, da auch bei unterschiedlich dicken Materialien stets einer der Rastansätze 34 für die entsprechende Verrastung sorgt.

Die Fixiermittel 30 weisen weiterhin zur Sicherung der Aufnahmebuchse 4 gegen Verdrehen mindestens einen radial vom Außenumfang des Halteabschnittes 28 abstehenden Positionsansatz 36 auf, der in eine korrespondierende Positionsausnehmung 38 innerhalb der Montageöffnung 2 des jeweiligen Bauteils 1 eingreift (siehe Fig. 1). In den dargestellten Ausführungen sind jeweils mehrere Positionsansätze 36 in einer bestimmten, geeigneten Anordnung vorgesehen.

Um beim Einführen des Gestänges 8 das Finden des Einführhilfselementes 16 noch weiter zu vereinfachen, ist das Einführhilfselement 16 bevorzugt rinnenartig und mit einer in Richtung seines freien Endes zunehmenden, den Querschnitt der Montageöffnung 2 übersteigenden Rinnenbreite und dabei derart elastisch ausgebildet, dass das Einführhilfselement 16 im Bereich seines freien Endes zum Einsetzen in die Montageöffnung 2 radial elastisch zusammendrückbar (verengbar) ist. Dies kann gemäß Fig. 3 noch dadurch unterstützt werden, dass das Einführhilfselement 16 an seinem freien Ende mindestens einen Längsschlitz 40 aufweist, wodurch eine Erhöhung der elastischen Verformbarkeit erreicht wird.

Weiterhin ist in der Ausgestaltung nach Fig. 3 vorgesehen, dass das Einführhilfselement 16 in seinem freien Endbereich zusätzliche Rastmittel 42 zum rastenden Vorfixieren des Gestänges 8 bei der Montage aufweist. Bei diesen Rastmitteln 42 kann es sich, wie dargestellt, um einen laschen- oder zungenförmigen Ansatz handeln, der das angesetzte Ende 8a des Gestänges 8 rastend umgreift.

Die erfindungsgemäße Aufnahmebuchse 4 läßt sich preiswert und wirtschaftlich herstellen, indem sie zusammen mit dem Einführhilfselement 16 als einstückiges Kunststoff-Formteil ausgeführt ist.

Die Erfindung ist nicht auf die dargestellten und beschriebenen Ausführungs- und Anwendungsbeispiele beschränkt, sondern umfaßt auch alle im Sinne der Erfindung gleichwirkenden Ausführungen. So ist die Erfindung grundsätzlich für alle beliebigen Gestänge-Durchführungen geeignet, also nicht nur für ein Verriegelungsgestänge im Bordkantenbereich einer Fahrzeugtür. Femer kann es sich anstatt einer im Querschnitt kreisförmigen Durchführöffnung 6 auch um einen beliebigen anderen, z. B. ovalen oder abgerundet rechteckigen Öffnungsquerschnitt in Anpassung an das jeweilige Gestänge handeln, wobei auch der Halteabschnitt 28 von der Hohlzylinderform entsprechend abweichen würde.

## Patentansprüche

1. Gestängedurchführung, insbesondere für ein Betätigungs-Gestänge (8) in einem Kraftfahrzeug, mit eine in eine Montageöffnung (2) eines Bauteils (1) einzusetzenden Aufnahmebuchse (4), die eine Durchführöffnung (6) für das Gestänge (8) aufweist, **dadurch gekennzeichnet, dass** die Aufnahmebuchse (4) einseitig ein verlängertes, die Montageöffnung (2) des Bauteils (1) überragendes, derart rampen- und/oder trichterartiges Einführhilfselement (16) aufweist, dass das Gestänge (8) mit einem einzuführenden Ende (8a) durch gleitende Anlage an bzw. in dem Einführhilfselement (16) in die Durchführöffnung (6) einführbar ist.

2. Gestängedurchführung nach Anspruch 1, **dadurch gekennzeichnet, dass** die Aufnahmebuchse (4) derart von einer Außenseite (22) des jeweiligen Bauteils (1) her mit dem Einführhilfselement (16) voran und gegebenenfalls unter elastischer, radial verengender Verformung des Einführhilfselementes (16) in die Montageöffnung (2) einsetzbar, insbesondere einrastbar ist, dass im eingesetzten Zustand das Einführhilfselement (16) frei in einen Innenraum (24) des Bauteils (1) ragt, während die Aufnahmebuchse (4) auf der Bauteil-Außenseite (22) vorzugsweise im Wesentlichen bündig mit einer die Montageöffnung (2) mündungsseitig umgebenden Bauteilfläche (26) abschließt.

3. Gestängedurchführung nach Anspruch 1 oder 2, **dadurch gekennzeichnet, dass** die Aufnahmebuchse (4) einen hohlzylindrischen, die Durchführöffnung (6) aufweisenden Halteabschnitt (28) aufweist, der Fixiermittel (30) zum lagefixierten Halten der Aufnahmebuchse (4) in der Montageöffnung (2) des Bauteils (1) aufweist.

4. Gestängedurchführung nach Anspruch 3, **dadurch gekennzeichnet, dass** der Halteabschnitt (28) der Aufnahmebuchse (4) als Fixiermittel (30) einerseits auf seiner dem Einführhilfselement (16) gegenüberliegenden Seite einen radialen, flanschartigen Auflageansatz (32) zur Auflage auf der äußeren Bauteilfläche (26) sowie andererseits im Übergangsbereich dem Einführhilfselement (16) mindestens einen radialen Rastansatz (34) zum rastenden Hintergreifen eines zum Bauteil-Innenraum (24) weisenden Öffnungsrandes der Montageöffnung (2) aufweist.

5. Gestängedurchführung nach Anspruch 4, **dadurch gekennzeichnet, dass** der Halteabschnitt (28) mindestens zwei in Einsetzrichtung gegeneinander versetzte, insbesondere jeweils ringförmig umlaufende und mit widerhakenartiger Profilkontur ausgebildete Rastansätze (34) aufweist.

6. Gestängedurchführung nach einem der Ansprüche 3 bis 5, **dadurch gekennzeichnet, dass** die Fixiermittel (30) mindestens einen radial vom Außenumfang des Halteabschnittes (28) abstehenden Positionsansatz (36) zum Eingriff in eine korrespondierende Positionsausnehmung (38) innerhalb der Montageöffnung (2) des Bauteils (1) aufweisen.

7. Gestängedurchführung nach einem der Ansprüche 1 bis 6, **dadurch gekennzeichnet, dass** das Einführhilfselement (16) rinnenartig und insbesondere mit einer in Richtung seines freien Endes zunehmenden, die Öffnungsweite der Montageöffnung (2) übersteigenden Rinnenbreite und dabei derart elastisch ausgebildet ist, dass das Einführhilfselement (16) im Bereich des freien Endes zum Einsetzen in die Montageöffnung (2) radial elastisch zusammendrückbar ist.

8. Gestängedurchführung nach Anspruch 7, **dadurch gekennzeichnet, dass** das Einführhilfselement (16) an seinem freien Ende mindestens einen Längsschlitz (40) aufweist.

9. Gestängedurchführung nach einem der Ansprüche 1 bis 8, **dadurch gekennzeichnet, dass** das Einführhilfselement (16) in seinem freien Endbereich Rastmittel (42) zum rastenden Vorfixieren des Gestänges (8) bei der Montage aufweist.

10. Gestängedurchführung nach einem der Ansprüche 1 bis 9, **dadurch gekennzeichnet, dass** die Aufnahmebuchse (4) mit dem Einführhilfselement (16) als einstückiges Kunststoff-Formteil ausgebildet ist.

## Claims

1. Linkage passage, in particular for an activation linkage (8) in a motor vehicle, having a receiving bushing (4) which is to be inserted into a mounting opening (2) in a component (1) and which has a through-opening (6) for the linkage (8), **characterized in that** the receiving bushing (4) has, at one end, an extended auxiliary insertion element (16) which protrudes beyond the mounting opening (2) of the component (1) and is in the form of a ramp and/or funnel such that the linkage (8) can be inserted, with an end (8a) which is to be inserted, into the through-opening (6) by sliding abutment against or in the auxiliary insertion element (16).

2. Linkage passage according to Claim 1, **characterized in that** the receiving bushing (4) can be inserted into the mounting opening (2) from an outside (22) of the respective component (1) with the auxiliary insertion element (16) at the front, and if appropriate with elastic, radially tapering deformation of the auxiliary insertion element (16), in particular can be latched in said mounting opening (2) in such a way that, in the inserted state, the auxiliary insertion element (16) projects freely into an interior space (24) of the component (1), while the receiving bushing (4) finishes on the outside (22) of the component so as to be preferably essentially flush with a component face (26) which surrounds the mounting opening (2) at the mouth end.

3. Linkage passage according to Claim 1 or 2, **characterized in that** the receiving bushing (4) has a hollow cylindrical securing section (28) which has the through-opening (6), said securing section (28) having fixing means (30) for securing the receiving bushing (4) in a positionally fixed fashion in the mounting opening (2) of the component (1).

4. Linkage passage according to Claim 3, **characterized in that**, as fixing means (30), the securing section (28) of the receiving bushing (4) has, on the one hand, a radial flange-like supporting extension (32) - on its side lying opposite the auxiliary insertion element (16) - for resting on the outer component surface (26) and, on the other hand, at least one radial latching extension (34) - in the junction region with the auxiliary insertion element (16) - for engaging in a latching fashion behind an opening edge - pointing to the interior space (24) of the component - of the mounting opening (2).

5. Linkage passage according to Claim 4, **characterized in that** the securing section (28) has at least two latching extensions (34) which are offset with respect to one another in the insertion direction and in particular each run round in an annular shape and are formed with a barb-like sectional contour.

6. Linkage passage according to one of Claims 3 to 5, **characterized in that** the fixing means (30) have at least one position extension (36) which protrudes radially from the outer circumference of the securing section (28) and has the purpose of engaging a corresponding position recess (38) within the mounting opening (2) of the component (1).

7. Linkage passage according to one of Claims 1 to 6, **characterized in that** the auxiliary insertion element (16) is formed in a groove-like fashion, and in particular with a groove width which increases in the direction of its free end and exceeds the opening width of the mounting opening (2), said auxiliary insertion element (16) being embodied elastically here in such a way that the auxiliary insertion element (16) can be radially elastically compressed in the region of the free end for insertion into the mounting opening (2).

8. Linkage passage according to Claim 7, **characterized in that** the auxiliary insertion element (16) has at least one longitudinal slit (40) at its free end.

9. Linkage passage according to one of Claims 1 to 8, **characterized in that** the auxiliary insertion element (16) has, in its free end region, latching means (42) for prefixing the linkage (8) in a latching fashion during mounting.

10. Linkage passage according to one of Claims 1 to 9, **characterized in that** the receiving bushing (4) with the auxiliary insertion element (16) is formed as a single-piece plastic preform.

## Revendications

1. Passage de tige, notamment pour tige de commande (8) dans un véhicule automobile, comprenant un manchon de réception (4) à insérer dans une ouverture de montage (2) d'un composant (1), lequel présente une ouverture de passage (6) pour la tige (8), **caractérisé en ce que** le manchon de réception (4) présente d'un côté un élément d'aide à l'insertion de type rampe et/ou entonnoir prolongé, dépassant de l'ouverture de montage (2) du composant (1) de telle sorte que la tige (8) puisse être insérée dans l'ouverture de passage (6) avec une extrémité à insérer (8a) par application coulissante contre ou dans l'élément d'aide à l'insertion (16).

2. Passage de tige selon la revendication 1, **caractérisé en ce que** le manchon de réception (4) peut être inséré, notamment par encliquetage, dans l'ouverture de montage (2) depuis un côté extérieur (22) du composant respectif (1) avec l'élément d'aide à l'insertion (16) en avant et éventuellement par déformation élastique, rétrécissant radialement, de l'élément d'aide à l'insertion (16), de telle sorte que dans l'état inséré, l'élément d'aide à l'insertion (16) pénètre librement dans un espace interne (24) du composant (1), tandis que le manchon de réception (4) affleure de préférence essentiellement hermétiquement du côté extérieur du composant (22) avec une surface du composant (26) entourant l'ouverture de montage (2) du côté de l'embouchure.

3. Passage de tige selon la revendication 1 ou 2, **caractérisé en ce que** le manchon de réception (4) présente une portion de retenue cylindrique creuse (28), présentant l'ouverture de passage (6), qui présente des moyens de fixation (30) pour retenir fixe en position le manchon de réception (4) dans l'ouverture de montage (2) du composant (1).

4. Passage de tige selon la revendication 3, **caractérisé en ce que** la portion de retenue (28) du manchon de réception (4) présente, en tant que moyens de fixation (30), d'une part sur son côté opposé à l'élément d'aide à l'insertion (16), une pièce d'appui (32) de type bride radiale destinée à venir en appui sur la surface extérieure du composant (26) et d'autre part, dans la région de transition à l'élément d'aide à l'insertion (16), au moins une pièce d'encliquetage radiale (34) destinée à venir en prise par l'arrière avec un bord d'ouverture de l'ouverture de montage (2) tourné vers l'espace interne du composant (24).

5. Passage de tige selon la revendication 4, **caractérisé en ce que** la portion de retenue (28) présente au moins deux pièces d'encliquetage (34) décalées l'une par rapport à l'autre dans la direction d'insertion, notamment s'étendant sous forme annulaire sur la périphérie et réalisées avec un contour profilé de type barbe.

6. Passage de tige selon l'une quelconque des revendications 3 à 5, **caractérisé en ce que** les moyens de fixation (30) présentent au moins une pièce de positionnement (36) saillant radialement depuis, la périphérie extérieure de la portion de retenue (28) pour venir en prise dans un évidement de positionnement correspondant (38) à l'intérieur de l'ouverture de montage (2) du composant (1).

7. Passage de tige selon l'une quelconque des revendications 1 à 6, **caractérisé en ce que** l'élément d'aide à l'insertion (16) est réalisé en forme de canal et notamment avec une largeur de canal croissant dans la direction de son extrémité libre, dépassant de la largeur d'ouverture de l'ouverture de montage (2) et réalisé en l'occurrence élastiquement de telle sorte que l'élément d'aide à l'insertion (16) puisse être comprimé radialement élastiquement dans la région de l'extrémité libre pour l'insertion dans l'ouverture de montage (2).

8. Passage de tige selon la revendication 7, **caractérisé en ce que** l'élément d'aide à l'insertion (16) présente au moins une fente longitudinale (40) à son extrémité libre.

9. Passage de tige selon l'une quelconque des revendications 1 à 8, **caractérisé en ce que** l'élément d'aide à l'insertion (16) présente dans sa région d'extrémité libre des moyens d'encliquetage (42) pour la fixation préalable par encliquetage de la tige (8) lors du montage.

10. Passage de tige selon l'une quelconque des revendications 1 à 9, **caractérisé en ce que** le manchon de réception (4) est réalisé avec l'élément d'aide à l'insertion (16) sous forme de pièce moulée en plastique d'une seule pièce.
